# EUROPÄISCHE PATENTANMELDUNG

(11) **EP 1 362 751 A1**
(43) Veröffentlichungstag der Anmeldung: **19.11.2003**
(21) Anmeldenummer: 03090142.5
(22) Anmeldetag: 15.05.2003
(51) Int. Cl.: B60R 21/20

(54) **Airbagmodul mit elastischer Lagerung des Gasgenerators**

(30) Priorität: 16.05.2002 DE 10222772; 01.07.2002 DE 20210372 U
(71) Anmelder: Takata-Petri AG, 63743 Aschaffenburg (DE)
(72) Erfinder: Sauer, Frank, 63843 Niedernberg (DE)
(74) Vertreter: Baumgärtel, Gunnar, Dr.

(57) **Zusammenfassung**

Die Erfindung bezieht sich auf ein Airbagmodul mit elastischer Lagerung eines Gasgenerators insbesondere für Lenkräder. Erfindungsgemäß ist für die elastische Lagerung mindestens ein elektrisch leitendes, elastisches Massenelement (6) vorgesehen.

## Beschreibung

Die Erfindung betrifft ein Airbagmodul mit elastischer Lagerung des Gasgenerators nach dem Oberbegriff des Anspruchs 1.

Airbagmodule mit elastisch gelagerten Gasgeneratoren werden vorzugsweise in Lenkrädern vorgesehen, um die Vibrationsneigung des Lenkrades zu verringern. Durch die elastische Lagerung des Gasgenerators wird eine Schwingungsentkopplung gegenüber dem Lenkrad erreicht. Bei entsprechender Dimensionierung des Gasgenerators oder der Federelemente kann dieser auch als Schwingungstilger dienen.

Neben Airbagmodulen, bei denen im Bereich der Befestigungsschrauben des Gasgenerators elastische Buchsen vorgesehen sind (EP 1 020 332), ist ein Airbagmodul bekannt, bei dem der Gasgenerator durch elastische Elemente gehalten ist, ohne daß in deren Bereich Verschraubungen vorgesehen sind (DE 201 08 594 U1). Bei diesem Airbagmodul ist als elastisches Element ein im Querschnitt geschlossenes Hohlprofil mit einer Umfangswand vorgesehen, deren radiale Außenseite einerseits am Gasgenerator und andererseits an einem modulseitigen Halteteil anliegt.

Bei diesen Airbagmodulen mit elastisch gelagerten Gasgeneratoren besteht keine metallische Verbindung zwischen dem Gasgenerator und dem Fahrzeug. Der Gasgenerator muß deshalb zusätzlich geerdet werden. Diese zusätzliche Erdung kann über ein flexibles Kabel erfolgen. Hierdurch ergeben sich Nachteile. Dieses Kabel liegt naturgemäß außerhalb der Airbageinheit, wodurch sich Sicherheitsprobleme bezüglich der Montage und des Transports der Airbageinheit ergeben. Es kann passieren, daß sich das Kabel bei diesen Tätigkeiten löst oder eine Selbstauslösung der Airbageinheit erfolgt. Weiterhin wird dieses Kabel durch den schwingenden Gasgenerator ebenfalls in Schwingung versetzt. Dabei darf das Kabel nirgendwo anschlagen.

Der Erfindung liegt deshalb die Aufgabe zugrunde, bei Airbagmodulen mit elastisch gelagerten Gasgeneratoren zusätzliche Arbeiten zur Erdung des Gasgenerators und Störungen in der Airbageinheit zu vermeiden.

Erfindungsgemäß wird das gemäß den Merkmalen des Anspruchs 1 erreicht.

Bei einem Airbagmodul mit elastischer Lagerung des Gasgenerators, insbesondere für Lenkräder, ist erfindungsgemäß für die elastische Lagerung mindestens ein elektrisch leitendes elastisches Massenelement vorgesehen. Unter einem Massenelement wird ein kompaktes Element verstanden nicht jedoch Federelemente, wie z.B. Schrauben-oder Spiralfedern, die aus drahtförmigem Material hergestellt sind.

Der Vorteil einer solchen Lagerung besteht darin, daß keine zusätzliche Erdung des Gasgenerators erfolgen muß und daß damit zusätzliche Kabel und damit verbundene zusätzliche Montagearbeiten entfallen können.

Das elektrisch leitende elastische Massenelement kann aus elektrisch leitendem Elastomeren bestehen. Insbesondere besteht es aus elektrisch leitendem Silikon oder elektrische leitendem Kautschuk.

Das elektrisch leitende elastische Massenelement ist zwischen dem Gasgenerator und einer mit dem Kraftfahrzeug verbundenen metallischen Baugruppe angeordnet. Es ist zweckmäßig, daß das elektrisch leitende elastische Massenelement zwischen einem Flansch am Gasgenerator und einem Schwingungstilgerblech angeordnet ist. In einer Ausführungsform ist das elastische Massenelement topfförmig , wobei der Boden des Topfes oben liegt und mit dem Flansch des Gasgenerators verbunden ist und wobei der Topf im unteren Abschnitt außen einen Ansatz für die Verbindung mit dem Schwingungstilgerblech aufweist. Es ist zweckmäßig, daß das Schwingungstilgerblech im Bereich des Ansatzes nach oben abgewinkelt ist und daß dieser abgewinkelte Abschnitt mit dem Ansatz des Topfes verbunden ist. Für die Verbindung zwischen dem Gasgenerator und dem Schwingungstilgerblech kann das elektrisch leitende elastische Massenelement am Schwingungstilgerblech anvulkanisiert sein und mit dem Flansch durch mindestens ein Niet verbunden sein.

In einer ersten Ausführungsform sind mehrere elektrisch leitende elastische Massenelemente im gleichen Winkelabstand zueinander angeordnet. Es ist zweckmäßig, mindestens drei elektrisch leitende elastische Massenelemente vorzusehen.

Es ist aber auch möglich, daß das elektrisch leitende elastische Massenelement den Gasgenerator ringförmig umgibt.

In einer weiteren Ausführungsform ist vorgesehen, daß das elektrisch leitende, elastisch verformbare Massenelement einknüpfbar ist. Vorzugsweise ist das Massenelement in den mit dem Gasgenerator verbundenen Flansch und in das Schwingungstilgerblech einknüpfbar. Das Massenelement weist vorzugsweise Nuten für das Einknüpfen auf, in die die zu verbindenden Teile eingreifen.

Die Erfindung soll in einem Ausführungsbeispiel anhand von Zeichnungen erläutert werden. Es zeigen:
- Fig. 1: einen Schnitt durch ein Airbagmodul eines Lenkrades;
- Fig. 2: die Einzelheit E nach der Fig. 1
- Fig. 3: eine Einzelheit, die anstelle der Ausführung in der Einzelheit E eine Ausführung mit einem einknüpfbaren elektrisch leitendem elastischen Massenelement zeigt.

Das Airbagmodul weist einen Gasgenerator 1, einen Generatorträger 2, einem Diffusor 3, einen Gassack 4 und eine Abdeckung 5 auf. Für die elastische Lagerung des Gasgenerators 1 sind drei elektrisch leitende elastische Massenelemente 6 vorgesehen, die im gleichen Winkelabstand zueinander angeordnet sind. Die Massenelemente 6 weisen Topfform auf, wobei der Boden 7 des Topfes oben liegt. Die Massenelemente 6 bestehen aus Silikon oder Kautschuk. Am Gasgenerator 1 sind im Bereich der Massenelemente 6 Flansche 8 vorgesehen, die mit den Massenelementen 6 durch Niete 9 verbunden sind.

Jedes topfförmige Massenelement 6 weist im unteren Abschnitt außen einen Ansatz 10 auf. Weiterhin sind am Generatorträger 2 im Bereich der Massenelemente 6 Schwingungsstilgerbleche 11 vorgesehen, die im Bereich der Ansätze 10 abgewinkelt sind. Die topfförmigen Massenelemente 6 sind mit den Schwingungstilgerblechen 11 durch Vulkanisieren verbunden, wobei die Ansätze 10 den abgewinkelten Abschnitt 12 umschließen. Die Schwingungstilgerbleche 11 sind durch Schrauben 13 und Muttern 14 mit einem nicht dargestellten metallenen Teil eines Lenkrades verbunden.

Bei dieser Anordnung ist eine elektrisch leitende Verbindung vom Gasgenerator 1 über die Flansche 8, die Niete 9, die elektrisch leitenden elastischen Massenelemente 6, die Schwingungstilgerbleche 11 sowie über die Schrauben 13 und Muttern 14 zu einem metallenen Teil des Lenkrades und damit zum Fahrzeug hergestellt und damit die Erdung des Gasgenerators gewährleistet.

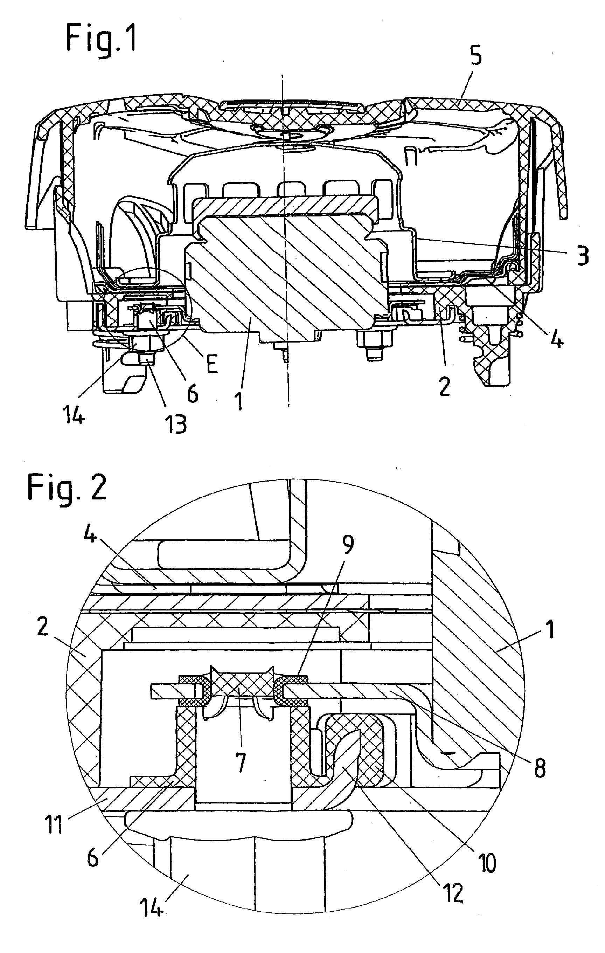

Anstele der Massenelemente 6, die im gleichen Winkelabstand zueinander angeordnet sind, kann auch ein einziges Massenelement den Gasgenerator ringförmig umgeben. In diesem Fall ist es vorteilhaft auch einen ringförmigen Flansch am Gasgenerator vorzusehen. Diese Ausführungsform wurde nicht gesondert dargestellt, da der Schnitt der Fig. 2 im wesentlichen auch dem Schnitt dieser weiteren Ausführungsform entspricht.

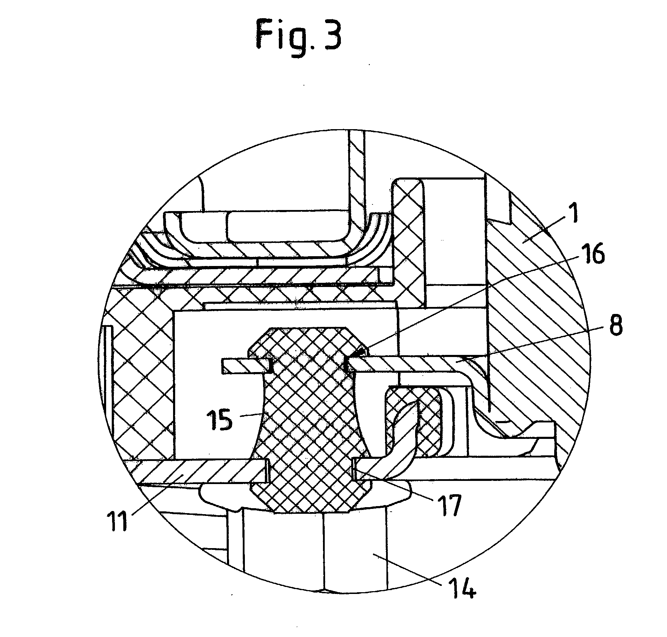

Bei der Ausführungsform der Fig. 3 ist ein einknüpfbares elektrisch leitendes, elastisches Massenelement 15 vorgesehen. Dieses weist eine umlaufende Nut 16 für das Einknüpfen des Flansches 8 auf, der wie in der vorher beschriebenen Ausführungsform mit dem Gasgenerator 1 verbunden ist. Weiterhin weist das Massenelement 15 eine umlaufende Nut 17 auf, die für das Einknüpfen des Schwingungstilgerbleches 11 vorgesehen ist. Dabei sind die Nuten so breit und so tief ausgebildet, daß die Teile 8 und 11 großflächig engen Kontakt zum Massenelement 15 haben, so daß auch bei dieser Ausführungsform die elektrische Verbindung gewährleistet ist.

## Patentansprüche

1. Airbagmodul mit elastischer Lagerung eines Gasgenerators, insbesondere für Lenkräder,
**dadurch gekennzeichnet,**
**daß** für die elastische Lagerung mindestens ein elektrisch leitendes, elastisches Massenelement (6, 15) vorgesehen ist.

2. Airbagmodul nach Anspruch 1, **dadurch gekennzeichnet, daß** das Massenelement (6, 15) aus elektrisch leitendem Silikon oder elektrisch leitendem Kautschuk besteht.

3. Airbagmodul nach Anspruch 1 oder 2, **dadurch gekennzeichnet, daß** das Massenelement (6) zwischen dem Gasgenerator (1) und einer mit dem Kraftfahrzeug verbundenen metallischen Baugruppe (11) angeordnet ist.

4. Airbagmodul nach mindestens einem der vorhergehenden Ansprüche, **dadurch gekennzeichnet, daß** das Massenelement (6) zwischen einem Flansch (8) am Gasgenerator (1) und einem Schwingungstilgerblech (11) angeordnet ist.

5. Airbagmodul nach mindestens einem der vorhergehenden Ansprüche, **dadurch gekennzeichnet, daß** das Massenelement (6) topfförmig ist, wobei der Boden (7) des Topfes oben liegt und mit dem Flansch (8) des Gasgenerators (1) verbunden ist und wobei das topfförmige Massenelement (6) im unteren Abschnitt außen einen Ansatz (10) für die Verbindung mit dem Schwingungstilgerblech (11) aufweist.

6. Airbagmodul nach Anspruch 4 oder 5, **dadurch gekennzeichnet, daß** das Schwingungstilgerblech (11) im Bereich des Ansatzes (10) abgewinkelt ist und daß dieser abgewinkelte Abschnitt (12) mit dem Ansatz (10) des topfförmigen Massenelementes (6) verbunden ist.

7. Airbagmodul nach mindestens einem der Ansprüche 4 bis 6, **dadurch gekennzeichnet, daß** das Massenelement (6) am Schwingungstilgerblech (11) anvulkanisiert ist und mit dem Flansch (8) durch mindestens ein Niet (9) verbunden ist.

8. Airbagmodul nach mindestens einem der vorhergehenden Ansprüche, **dadurch gekennzeichnet, daß** mehrere Massenelemente (6) im gleichen Winkelabstand zueinander angeordnet sind.

9. Airbagmodul nach mindestens einem der vorhergehenden Ansprüche 1 bis 7, **dadurch gekennzeichnet, daß** das Massenelement den Gasgenerator (1) ringförmig umgibt.

10. Airbagmodul nach mindestens einem der Ansprüche 1 bis 4 sowie 8 und 9, **dadurch gekennzeichnet, daß** das elektrisch leitende, elastisch verformbare Massenelement (15) einknüpfbar ist.

11. Airbagmodul nach Anspruch 10, **dadurch gekennzeichnet, daß** das Massenelement (15) in den mit dem Gasgenerator (1) verbundenen Flansch (8) und in das Schwingungstilgerblech (11) einknüpfbar ist.

12. Airbagmodul nach Anspruch 10 und 11, **dadurch gekennzeichnet, daß** das Massenelement (15) Nuten (16, 17) für das Einknüpfen aufweist.
